# EUROPEAN PATENT APPLICATION

(11) **EP 2 373 009 A2**
(43) Date of publication of application: **05.10.2011**
(21) Application number: 11001997.3
(22) Date of filing: 10.03.2011
(51) Int. Cl.: H04N 5/60

(54) **Television signal receiver apparatus with sound signal detection**

(30) Priority: 31.03.2010 EP 10003630
(71) Applicant: Sony Corporation, Tokyo 108-0075 (JP)
(72) Inventor: Nöthlings, Rolf, 70329 Stuttgart (DE)
(74) Representative: Müller - Hoffmann & Partner

(57) **Abstract**

A television signal receiver apparatus comprises a sound signal detection unit that analyzes a digital signal derived from an analogue broadcast television signal by using predefined analyzing frequencies and a demodulator unit, wherein for each analyzing frequency a demodulator output signal is obtained. The demodulator output signal contains a sound signal included in the television signal, when the analyzing frequency is equal or close to a sound signal carrier and contains in substance only broadband noise otherwise. A filter unit having a passband outside the frequency range of the sound signal filters the demodulator output signals and generates filtered signals. A detector unit generates a detector signal indicating that a signal level in the respective filtered signal falls below a predetermined threshold.

## Description

Embodiments of the invention refer to a television signal receiver apparatus and an integrated circuit including a detector unit for detecting the presence of a sound signal carrier. Other embodiments refer to a method of detecting the presence of a sound signal carrier in an analogue broadcast television signal.

TV (television) sets support a plurality of analogue television standards differing with regard to the modulation of the broadcast television signal, which contains a composite video signal describing a picture content and a sound signal (audio signal) describing the audio content of a television channel. A plurality of video standards is defined for the video signal and a plurality of audio standards is defined for the sound signal. The television standards combine video and audio standards in various different ways, wherein an audio standard may accompany different video standards and a video standard may be combined with different audio standards.

The object to be achieved with the embodiments of the present invention is to provide an integrated circuit, a universal television signal receiver apparatus and a method for processing television signals in a television signal receiver apparatus allowing the ubiquitous application of television signal receiver apparatus in a comfortable way. This object is achieved with the subject matters of the independent claims. Further embodiments are specified in the dependent claims respectively.

Details of the invention will become more apparent from the following description of embodiments in connection with the accompanying drawings, wherein features of the various embodiments may be combined unless they exclude each other.

### BRIEF DESCRIPTION OF THE DRAWINGS

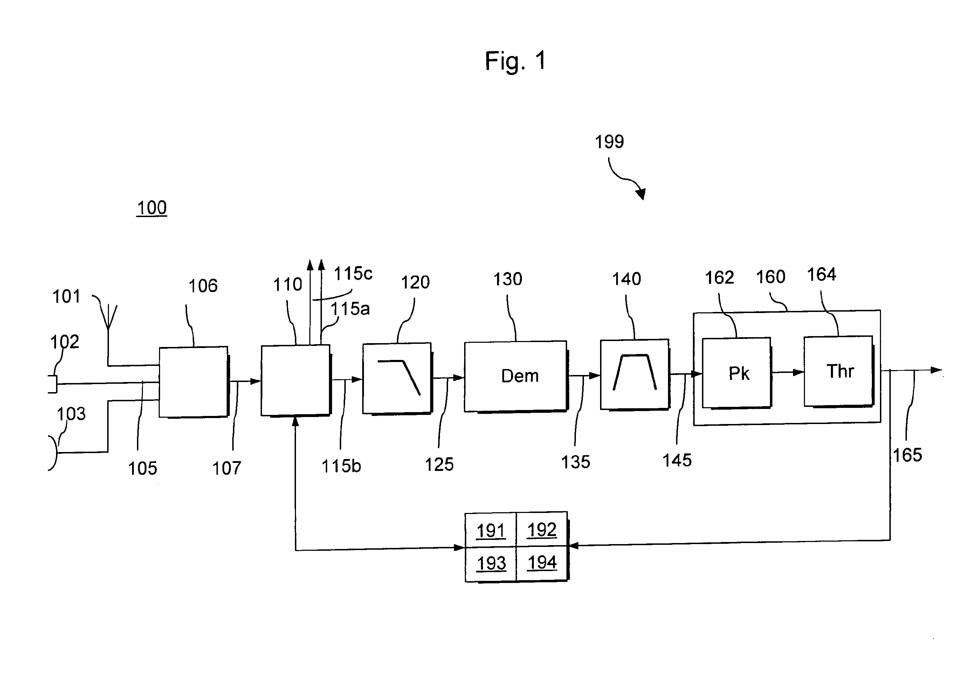

Figure 1 is a schematic block diagram illustrating a sound signal detection unit of a television receiver in accordance with an embodiment of the invention.

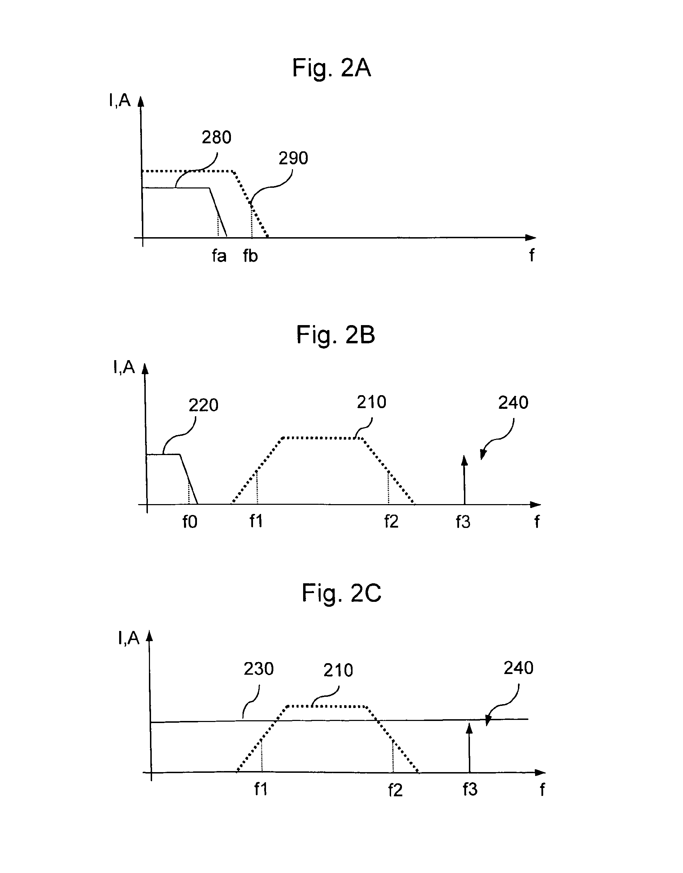

Figure 2A is a schematic diagram illustrating the effect of a low-pass filter of a sound signal detection unit on a modulated information signal branched off from a demodulated video signal and containing a sound signal for illustrating the mode of action of a television signal receiver apparatus in accordance with an embodiment.
Figure 2B is a schematic diagram illustrating the effect of a band-pass filter of the sound signal detection unit on a signal derived from the modulated information signal of Figure 2A by applying an analyzing frequency in case the analyzing frequency in substance corresponds to a sound signal carrier in the modulated information signal.
Figure 2C is a schematic diagram illustrating the effect of the band-pass filter of Figure 2B on a signal derived from the modulated information signal of Figure 2A by applying an analyzing frequency in case the analyzing frequency does not correspond to a sound signal carrier in the modulated information signal.

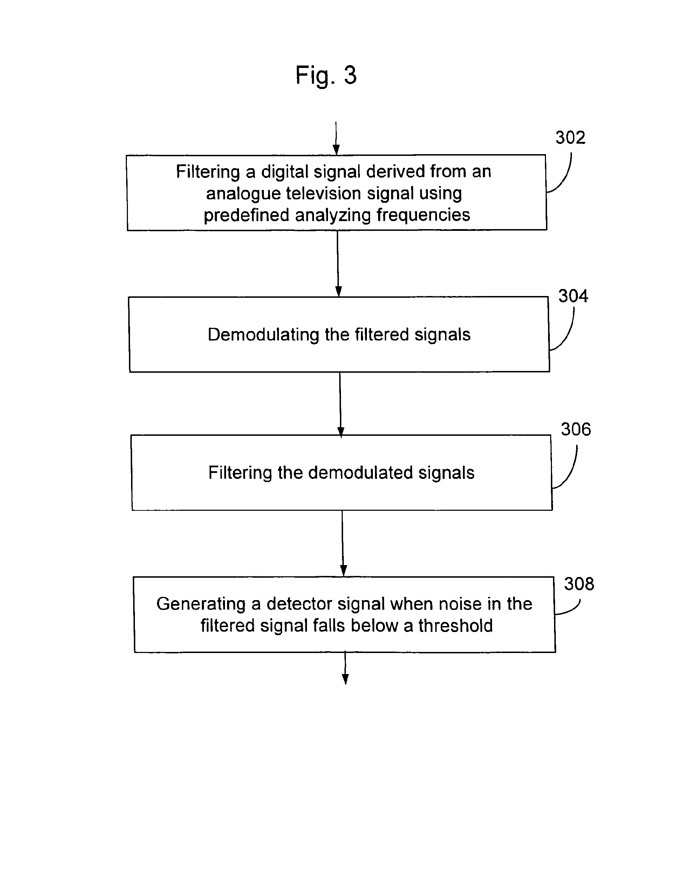

Figure 3 is a simplified flow-chart of a method of processing a television signal in accordance with another embodiment.

Figure 1 refers to a television signal receiver apparatus 100 that receives an analogue broadcast television signal 105 for example via an RF (radio frequency) antenna 101, a cable connector 102 or a satellite reception equipment 103. The broadcast television signals 105 transmit a plurality of television channels using a plurality of carrier frequencies. Each broadcast television signal 105 includes one or more sound signals describing the audio contents and a composite video signal that contains information describing brightness and chrominance of pictures in a video stream transmitted in the TV channel.

The television signal receiver apparatus 100 may be a television tuner or may be integrated in a TV set, a video recording system, a handheld communications unit equipped with TV functionality or a computer with TV functionality, for example a multi-media computer. The broadcast television signal 105 may be a signal in conformity with a television standard as defined by the CCIR (Comité Consultatif International des Radiocommunications) letter code and using the NTSC (national television system committee) system, the PAL (phase alternating line) system, or the SECAM (séquentiel couleur a mémoire) colour system, for example PAL-N, PAL-I, PAL-B, PAL-D, PAL-K, NTSC-M, SECAM-L, SECAM-B or SECAM-G.

A receiver unit 106 tunes in to a video carrier frequency of a TV channel selected by a viewer or during an automatic channel scan and samples the received analogue broadcast television signal 105. A sound signal detection unit 199 includes a signal processing unit 110 that receives the sampled television signal 107 and that may derive therefrom, for example, a digital video signal 115a representing or containing the composite video signal and one or more sound signals 115c derived from one or more sound carriers related to that video carrier frequency to which the receiver unit 110 is tuned in.

However, in applications where the broadcast standard used at the broadcast station for the transmission of the analogue broadcast television signal 105 is unknown for the signal processing unit 110, the signal processing unit 110 is not in each case capable of unambiguously deriving the sound signal carrier frequencies of the sound signals 115c from an analysis of the detected video carrier frequency or the digital video signal 115a. And even where the signal processing unit 110 were to reliably predict a main sound carrier, sub sound signal carrier frequencies often would remain ambiguous.

For example, some broadcast stations combine the variants 1, 2 and 3 of the video standards D and K with the A2 audio standard using two separate FM (frequency modulated) sound carriers, wherein one of them is defined at 6.5 MHz and the other one may be at 6.2578125, 6.7421875 or 5.7421875 MHz. The video standard N is used in combination with the A2, the EIA-J (Electronics Industries Association of Japan), and the BTSC (Broadcast Television System Committees] audio standards, wherein BTSC and EIA-J provide only one sound carrier, whereas A2 uses two sound carriers. In the latter case, the signal processing unit 110 is not capable of distinguishing the A2 standard from the BTSC and EIA-J standards during transmission of monaural contents.

According to an embodiment of the invention, the signal processing unit 110 uses predefined analyzing frequencies for scanning the sampled television signal 107 for possible sound carriers. The signal processing unit 110 outputs a modulation information signal 115b that in substance corresponds to the television signal 107 frequency-shifted by the current analyzing frequency. When the current analyzing frequency corresponds to a frequency of a sound carrier in the sampled television signal 107, the modulated information signal 115b contains a digital complex base-band version of the sound signal contained in that broadcast television signal 105 to which the receiver unit 106 is tuned in. Otherwise, the modulated information signal 115b does not contain a base-band version of a sound signal and in substance only contains frequency-shifted video signal components.

The signal processing unit 110 outputs the digital, modulated information signal 115b that contains two orthogonal components to a low-pass pre-filter unit 120. The pre-filter unit 120 suppresses out-of-band portions that may be contained in the modulated information signal 115b, for example the frequency shifted video signal component. The upper cut-off frequency of the pre-filter unit 120 is sufficiently high for allowing a significant portion of the sideband energy of a base-band representation of a sound signal to pass. For example, the significant portion may be about 98 % and the upper cut-off frequency of the pre-filter unit 120 may correspond to the Carson bandwidth of the modulated information signal 115b.

The upper cut-off frequency of the pre-filter unit 120 is sufficiently low to suppress out-of-band portions and to separate a base-band representation of the sound signal in the modulated information signal 115b from video signal components. According to an embodiment, the upper cut-off frequency of the pre-filter unit 120 is in the range of 50 kHz to 180 kHz, for example about 150 kHz. The digital signal 125 at the output of the pre-filter unit 120 represents the filtered modulated information signal. In case the analyzing frequency matches a sound signal carrier, the digital signal 125 may contain a stereophonic signal, one monaural signal or two different monaural signals modulated onto a main sound carrier or onto a main sound carrier and a sub sound carrier. Otherwise, the digital signal 125 contains no or only a weak signal.

The pre-filter unit 120 outputs the digital signal 125 to a demodulator unit 130 that demodulates the digital signal 125 to obtain an output signal 135. The demodulator unit 130 includes an FM (frequency modulation) demodulator and may also include an AM (amplitude modulation) demodulator unit or may be a configurable unit whose mode of operation can be switched between AM and FM demodulation. When the current analyzing frequency in the signal processing unit 110 corresponds to a sound carrier in the sampled television signal 107, the demodulator output signal 135 corresponds to a sound signal contained in that broadcast television signal 105 to which the receiver unit 106 is tuned in, Otherwise, the demodulator output signal 135 in substance contains broadband noise having a bandwidth substantially greater than a sound signal.

The analyzing frequency corresponds to a sound carrier, when a deviation between the analyzing frequency and the sound carrier frequency contained in the modulated information signal 115b is not greater than half the minimum frequency distance between two sound carriers defined in the various standards. For example, some broadcast stations use a combination of the B/G video standard and the Nicam (Near Instantaneous Companded Audio Multiplex) audio standard, wherein a digital information signal is modulated on a sub sound carrier at 5.85 MHz. Other broadcast stations use a combination of the B/G video standard and a variant of the A2 audio standard that uses a sub sound carrier at 5.7421875 MHz. Both combinations use the same main sound signal. According to an embodiment, the sound signal detection unit 199 is designed to be capable of separating these two sub sound carriers having a distance of approximately 110 kHz.

The embodiments use the demodulator FM threshold effect, according to which above a certain input signal level the SNR in a demodulator output signal moderately increases with the input signal level, whereas below that certain input signal level, the SNR in the demodulator output signal falls steeply with decreasing input signal levels. In other words, where the digital signal 125 does not contain a sound signal or contains only a weak sound signal, the demodulator primarily outputs broadband noise. Where the digital signal 125 does contain a sound signal, the demodulator unit 130 outputs a band-limited signal. Small deviations between the analyzing frequency and the signal carrier frequency in substance only contribute to a DC (direct current) portion in the demodulator output signal 135, whereas at a significant deviation from or in the absence of a signal carrier the demodulation generates strong broadband noise in the demodulator output signal 135.

A filter unit 140 filters the demodulator output signal 135, wherein the passband of the filter unit 140 is outside the bandwidth of a typical demodulated sound signal. When the digital signal 125 contains a sound signal, the filter unit 140 attenuates the sound signal and no or only low signal power can be detected in the filtered signal 145 at the output of the filter unit 140. Otherwise, when the digital signal 125 does not contain a sound signal, the demodulator unit 130 generates broadband noise due to the FM threshold effect. A portion of that broadband noise falls within the passband of the filter unit 140 and a noise signal can be detected in the filtered signal.

A detector unit 160 evaluates the filtered signal 145 and may output a detector signal 165 that indicates the presence of a sound signal carrier in the digital signal 125 when the filtered signal 145 contains no or only weak broadband noise. For example, the presence of a sound signal carrier may be indicated, when the signal power of the filtered signal 145 falls below a predefined threshold. The filter unit 140 attenuates predetermined frequency components that are typically contained in the demodulator output signal 135 when the digital signal 125 contains a sound signal and passes over frequency components that are typically notcontained in the demodulator output signal 135 when the digital signal 125 contains a sound signal.

For example, the filter unit 140 is a high-pass filter or a band-pass filter and has a lower cut-off frequency that is higher than the upper limiting frequency of a typical sound signal. According to an embodiment, the lower cut-off frequency of the filter unit 140 is derived from the upper cut-off frequency of the pre-filter unit 120. For example, the lower cut-off frequency of the filter unit 140 is not lower or in the range of the upper cut-off frequency of the pre-filter unit 120.

According to an embodiment, the sound signal contains sound information from 0 Hz to 15 kHz. In this case, the lower cut-off frequency of the filter unit 140 may be 15 kHz or higher, for example at least 10% above the upper limiting frequency of the sound signal. The filter unit 140 may be a band-pass filter whose upper cut-off frequency is determined such that expectable spurious disturbance or interference frequencies appear outside the passband. For example, interference frequencies typically appear at harmonics of the line frequencies or other repetitive signals in the video signals. Though attenuated in the sound signal branch, these signals may still occur in the demodulated signal 135. According to another embodiment, the filter unit 140 may be a band-pass filter whose upper cut-off frequency depends on the sample rate according to the Nyquist theorem.

The detector unit 160 may comprise a peak detection unit 162 and a threshold decision unit 164. The peak detection unit 162 may detect a peak amplitude in the filtered signal 145. The threshold decision unit 164 switches a signal level of the detector signal 165 in response to the peak amplitude of the filtered signal 145 falling below or exceeding a predefined threshold value. In accordance with another embodiment, the detector unit 160 may comprise an integrator unit integrating the filtered signal 145 during a predetermined time period, wherein the threshold decision unit 164 compares the integrated filtered signal with a predefined threshold value. The pre-filter unit 120, the demodulator unit 130, the filter unit 140 and the detection unit 160 form a sound signal carrier detection unit 199 and may be integrated in the same integrated circuit.

The diagrams of Figures 2A to 2C illustrate the effects of the functional units of the television signal receiver apparatus 100 of Figure 1. Figure 2A schematically shows the spectral range 280 of the modulated information signal having an upper limiting frequency fa. The cut-off frequency fb of the pre-filter unit 120 is selected to be greater than the limiting frequency fa and lower than a lower limiting frequency of out-of-band portions which may be contained in the digital complex base-band signal and which can result from the demodulation of the sampled television signal in the previous stages.

Figure 2B shows the spectral range 220 of the demodulator output signal in the case the current analyzing frequency corresponds to a sound signal carrier frequency present in the sampled television signal 107 such that the modulated information signal 115b contains a base-band representation of a sound signal.

The demodulator output signal has the spectral range of the respective baseband sound signal with a limiting frequency of f0, for example 15 kHz, wherein f0 is lower than the first limiting frequency fa of the modulated information signal 115b. The passband 210 of the filter unit 140 is selected such that it does not overlap with the spectral range of the baseband sound signal. For example, the lower cut-off frequency f1 may be defined by the cut-off frequency fb of the pre-filter unit 120 of Figure 1. In addition, the passband 210 may be selected such that predictable interference signals resulting from the processing in the previous stages and appearing at frequencies f3 may be suppressed. For example the passband 210 may have an upper cut-off frequency f2 between 200 and 400 kHz, for example about 300 kHz.

Figure 2B refers to the functionality of the filter unit 140 of Figure 1 in the case the the current analyzing frequency is equal to or approximately equal to a sound signal carrier frequency present in the sampled television signal 107 such that the modulated information signal 115b contains a base-band representation of a sound signal. The signal power is concentrated in the spectral range 220 and no or only a weak signal is present within the passband 210. The detector unit 160 of Figure 1 detects no signal or only a low signal amplitude or signal power in the filtered signal at the output of the filter unit.

Figure 2C refers to a situation where the current analyzing frequency is not equal to or approximately equal to a sound signal carrier frequency present in the sampled television signal 107 such that due to the FM threshold effect the demodulator unit generates broadband noise in the demodulator output signal. The noise spectrum 230 overlaps with the passband 210 such that noise is present within the filter passband 210. The detector unit 160 of Figure 1 detects high noise signal power or high noise signal amplitudes in the filtered signal at the output of the filter unit. Providing the filter unit as a band-pass filter with an upper cut-off frequency below predictable spurious frequencies such as harmonics of line frequencies increases the reliability of noise detection.

Referring again to Figure 1 , in the case where the current analyzing frequency does not correspond to a sound signal carrier in the digital signal 125, the detector unit 160 detects the presence of noise in the filtered signal 145. When the noise level falls below a predetermined threshold, the detector unit 160 may generate the detector signal 165 for indicating that the signal processing unit 110 has tuned in to a sound carrier and that the analyzing frequency currently used by the signal processing unit 110 corresponds to a sound signal carrier. For determining more than one sound signal carrier frequency assigned to that video carrier to which the receiver unit 106 is tuned in, the same functional units may be used for successively determining main and sub sound carriers.

By observing the detector signal 165 and relating it to the applied analyzing frequencies, a sound signal carrier information can be obtained that includes information on the number and the frequency of detected signal sound carriers for the television signal the television signal receiver apparatus 100 is tuned in.

According to an embodiment, a first control unit 191 may use the detector signal 165 to control the signal processing unit 110. For example, the first control unit 191 may control the signal processing unit 110 to continuously change the analyzing frequency as long as the signal processing unit 110 has not applied the matching analyzing frequency. The first control unit 191 may contain information on the eligible analyzing frequencies. In addition, the first control unit 191 may use information provided by other stages, for example, by the signal processing unit 110, for pre-selecting suitable analyzing frequencies. For example, when the video standard of the received broadcast television signal has been identified, scanning for sound signal carriers may be restricted to those frequencies actually used in combination with the identified video standard anywhere. The first control unit 191 may notify other instances in the television signal receiver apparatus 100 and may continue or stop the scan for sound signal carriers when all sound signal carriers have been identified.

In accordance with another embodiment, a second control unit 192 uses the sound signal carrier information to control the output of sound signals 115c from the signal processing unit 110 in another sound signal branch. For example, the second control unit 192 may provide the demodulator frequencies for a sound signal processing sub-unit included in the signal processing unit 110. According to another embodiment, the second control unit 192 may suppress the output of sound signals to an amplifier stage as long as no or not all sound signal carriers have been detected.

According to a further embodiment, a third control unit 193 may control the receiver unit 106 and the signal processing unit 110 to perform an automatic video channel scan and to control the signal processing unit 110 to scan for sound signal carriers each time the receiver unit 106 has tuned in to a television broadcast carrier frequency.

In accordance with another embodiment a fourth control unit 194 controls the signal processing unit 110 to scan for a sub sound signal carrier each time after a main sound carrier has been detected and up to a sub-sound signal carrier has been detected. When the receiver unit 106 tunes in to a video frequency during a period of monaural transmission, the fourth control unit 194 allows capturing a sub sound signal carrier for a stereophonic sound signal as soon as the transmission switches to stereophonic transmission later.

Each of the pre-filter unit 120, the demodulator unit 130, the filter unit 140 and the detection unit 160 may be realized in hardware, software or as a combination thereof. In accordance with an embodiment, they are realized as signal processing circuits integrated in an integrated circuit, for example an ASIC (application specific integrated circuit), which may also include the signal processing unit 110.

Each of the control units 191, 192, 193, 194 described in terms of their functions above may be may be realized in hardware, software or as a combination thereof. According to other embodiments two, three or all control units are integrated in the same physical entity.

The embodiments of the invention provide a robust solution for determining the sound signal carriers in the broadcast television signal in to which the receiver unit 106 is currently tuned. Level changes caused by transmitter characteristics resulting in varying P/S (picture carrier/sound carrier) ratios, varying S1 /S2 (first stereophonic signal/second stereophonic signal) ratios, carrier offsets or by internal processing, for example a receiver AGC (automatic gain control), do not or only to a low degree effect the detector signal 165. A slight frequency offset between the analyzing frequency and a sound signal carrier results only in a DC component in the demodulator output signal 135. While level detectors tend to interpret noise as additional carrier level or as valid signal information, the embodiments are robust against the presence of noise in the received broadcast television signal.

The embodiments allow manufacture and distribution of a television signal receiver apparatus for ubiquitous application, wherein the television signal apparatus is capable of receiving broadcast stations using different standards without the need of cumbersome pre-settings on the manufacturer's or the viewer's side. For example, a television receiver may be used in regions where it receives broadcast television signals from a plurality of broadcast stations using different standards.

In addition, the embodiments facilitate an automatic switch to the stereophonic rendering of audio contents even in cases, where the broadcast television signal contains only monaural contents at the time the apparatus tunes in to the broadcast signal. According to another aspect, the embodiments improve the reliability of the detection and qualification of sound signals included in a broadcast television signal.

Figure 3 refers to a method for processing an analogue broadcast television signal received at a television signal receiver apparatus. The method includes generating a detector signal. A television signal is analyzed using predefined analyzing frequencies, wherein a modulated information signal is derived that includes a baseband representation of a sound signal when the analyzing frequency matches a sound signal carrier in the television signal (302). The modulated information signal is filtered to attenuate frequency components not contained in the sound signal baseband representation (304). The filtered modulated information signal is FM demodulated, wherein a digital demodulator output signal is obtained (306). The demodulator output signal contains a sound signal included in the television signal when the analyzing frequency matches a sound signal carrier in the television signal; otherwise it in substance contains broadband noise. The demodulator output signal is filtered using a filter unit having a passband outside the bandwidth or frequency range of the sound signals, wherein filtered signals are obtained (308). A detector signal may be generated that indicates when a signal in the filtered signal falls below a predetermined threshold.

By relating the detector signal with the currently applied analyzing frequency, sound signal carrier information can be obtained that can be used to control the generation of sound signals output by the television signal receiver apparatus. In the demodulator output signal, frequency components corresponding to predictable spurious frequencies resulting from a composite video signal contained in the television signal may be attenuated in order to increase the reliability of the sound signal carrier detection.

Support for the claims and further embodiments are defined in the following itemized list:
1. An integrated circuit comprising
   a demodulator unit configured to demodulate a digital signal derived from a sampled analogue broadcast television signal by analyzing the television signal at predefined analyzing frequencies, wherein a demodulator output signal is obtained that contains broadband noise when the analyzing frequency does not correspond to a sound carrier frequency;
   a filter unit configured to filter the demodulator output signal and having a passband outside the bandwidth of the sound signal, wherein a filtered signal is generated; and
   a detector unit configured to generate a detector signal indicating that a signal level in the filtered signal falls below a predetermined threshold.
2. The integrated circuit of item 1, wherein
   the demodulator output signal contains a sound signal included in the television signal when the analyzing frequency corresponds to a sound carrier frequency.
3. The integrated circuit of one of items 1 or 2, wherein
   the demodulator unit is configured to frequency demodulate the digital signal.
4. The integrated circuit of any of the preceding items, wherein
   the analyzing frequency corresponds to a sound carrier when a deviation between the analyzing frequency and the sound carrier frequency is not greater than half the minimum frequency distance between two neighbouring sound carriers.
5. The integrated circuit of any of items 1 to 4, wherein
   the digital signal is a low-pass filtered complex base-band signal derived from the television signal .
6. The integrated circuit of any of items 1 to 5, wherein
   a lower cut-off frequency of the filter unit is not lower than an upper limiting frequency of the sound signal.
7. The integrated circuit of any of items 1 to 6, wherein
   a lower cut-off frequency of the filter unit is in the range of an upper limiting frequency of the sound signal.
8. The integrated circuit of any of items 1 to 7, further comprising
   a pre-filter unit configured to generate the digital signal from a modulated information signal derived from the television signal by frequency shifting, wherein the pre-filter unit is configured to attenuate out-of-band components of the sound signal.
9. The integrated circuit of item 8, wherein
   a lower cut-off frequency of the filter unit is not lower than an upper cut-off frequency of the pre-filter unit.
10. A television receiver comprising
   a demodulator unit configured to demodulate a digital signal derived from a sampled analogue broadcast television signal by analyzing the television signal at predefined analyzing frequencies, wherein a demodulator output signal is obtained that contains broadband noise when the analyzing frequency does not correspond to a sound carrier frequency;
   a filter unit configured to filter the demodulator output signal and having a passband outside the bandwidth of the sound signal, wherein a filtered signal is generated; and
   a detector unit configured to generate a detector signal indicating that a signal level in the filtered signal falls below a predetermined threshold.
11. The television receiver of item 10, further comprising
   a signal processing unit configured to shift the television signal by the analyzing frequencies for obtaining a modulated information signal, and
   a pre-filter unit configured to generate the digital signal by attenuating, in the modulated information signal, out-of-band components of the sound signal.
12. The television receiver of item 11, further comprising
   a first control unit configured to control the signal processing unit to continuously change or not change the analyzing frequency in response to the detector signal .
13. The television receiver of item 11 or 12, further comprising
   a second control unit configured to control output sound signals of the signal processing unit in response to the detector signal .
14. The television receiver of any of items 1 1 to 13, further comprising
   a receiver unit configured to tune in to a television broadcast carrier frequency; and
   a third control unit configured to control the receiver unit to perform a channel scan and to control the signal processing unit to scan for sound signal carriers each time the receiver unit has tuned in to a television broadcast carrier frequency.
15. The television receiver of any of items 11 to 14, further comprising
   a fourth control unit configured to control the signal processing unit to scan for a sub sound signal carrier each time after a main sound carrier has been detected and up to a sub sound signal carrier has been detected.
16. A method for processing a received analogue broadcast television signal in a television signal receiver apparatus, the method comprising
   scanning for sound signal carriers by analyzing a digital signal derived from the television signal at predefined analyzing frequencies, wherein a demodulator output signal is obtained that contains broadband noise when the analyzing frequency does not correspond to a sound carrier frequency in the television signal;
   filtering the demodulator output signal using a filter unit having a passband outside the bandwidth of the sound signal to generate a filtered signal; and
   obtaining sound signal carrier information based on a detector signal indicating when a signal level in the filtered signal falls below a predetermined threshold.
17. The method of item 16, further comprising
   attenuating, in the demodulator output signal, frequency components corresponding to predictable spurious frequencies resulting from a composite video signal contained in the television signal.
18. The method of item 16 or 17, further comprising
   sampling the analogue broadcast television signal and demodulating the sampled signal to generate one or more demodulated sound signals; and
   controlling an output of the demodulated sound signals in response to the sound signal carrier information.
19. The method of any of items 14 to 16, wherein
   the scanning for sound signal carriers is performed each time the television signal receiver apparatus has tuned in to a television signal carrier.
20. The method of any of items 14 to 17, further comprising
   scanning for a sub sound signal carrier each time a main sound carrier has been detected up to a sub sound signal has been detected.
21. A method for generating a detector signal in a television signal receiver apparatus, the method comprising
   analyzing a digital signal derived from a television signal received at the television signal receiver apparatus at predefined analyzing frequencies, wherein for each analyzing frequency a demodulator output signal is obtained that contains a sound signal included in the television signal when the analyzing frequency corresponds to a sound carrier frequency in the digital signal and that is broadband noise otherwise;
   filtering the demodulator output signals using a filter unit having a passband outside the bandwidth of the sound signal to generate filtered signals; and
   generating, for each analyzing frequency, a detector signal indicating when a signal level in the filtered signal falls below a predetermined threshold.
22. An integrated circuit comprising
   analyzing means for analyzing a digital signal derived from an analogue broadcast television signal, wherein predefined analyzing frequencies are used and for each analyzing frequency a demodulator output signal is obtained that contains a sound signal included in the television signal when the analyzing frequency corresponds to a sound carrier frequency and that is broadband noise otherwise;
   filtering means for filtering the demodulator output signals using a passband outside the bandwidth of the sound signal, wherein filtered signals are generated; and
   detection means for generating a detector signal indicating that a signal level in the respective filtered signal falls below a predetermined threshold.
23. An integrated circuit comprising
   a demodulator unit configured to demodulate a digital signal derived from a sampled analogue broadcast television signal by analyzing the television signal at predefined analyzing frequencies, wherein a demodulator output signal is obtained that contains a sound signal included in the television signal when the analyzing frequency corresponds to a sound carrier frequency and that is broadband noise otherwise;
   a filter unit configured to filter the demodulator output signal and having a passband outside the bandwidth of the sound signal, wherein a filtered signal is generated; and
   a detector unit configured to generate a detector signal indicating that a signal level in the filtered signal falls below a predetermined threshold.

## Claims

1. An integrated circuit comprising
a demodulator unit configured to demodulate a digital signal derived from a sampled analogue broadcast television signal by analyzing the television signal at predefined analyzing frequencies, wherein a demodulator output signal is obtained that contains broadband noise when the analyzing frequency does not correspond to a sound carrier frequency;
a filter unit configured to filter the demodulator output signal and having a passband outside the bandwidth of the sound signal, wherein a filtered signal is generated; and
a detector unit configured to generate a detector signal indicating that a signal level in the filtered signal falls below a predetermined threshold.

2. The integrated circuit of claim 1, wherein
the demodulator output signal contains a sound signal included in the television signal when the analyzing frequency corresponds to a sound carrier frequency.

3. The integrated circuit of one of claims 1 or 2, wherein
the demodulator unit is configured to frequency demodulate the digital signal.

4. The integrated circuit of any of the preceding claims, wherein
the analyzing frequency corresponds to a sound carrier when a deviation between the analyzing frequency and the sound carrier frequency is not greater than half the minimum frequency distance between two neighbouring sound carriers.

5. The integrated circuit of any of claims 1 to 4, wherein
the digital signal is a low-pass filtered complex base-band signal derived from the television signal .

6. The integrated circuit of any of claims 1 to 5, wherein
a lower cut-off frequency of the filter unit is not lower than an upper limiting frequency of the sound signal and/or
a lower cut-off frequency of the filter unit is in the range of an upper limiting frequency of the sound signal.

7. The integrated circuit of any of claims 1 to 6, further comprising
a pre-filter unit configured to generate the digital signal from a modulated information signal derived from the television signal by frequency shifting, wherein the pre-filter unit is configured to attenuate out-of-band components of the sound signal.

8. The integrated circuit of claim 7, wherein
a lower cut-off frequency of the filter unit is not lower than an upper cut-off frequency of the pre-filter unit.

9. A television receiver comprising
a demodulator unit configured to demodulate a digital signal derived from a sampled analogue broadcast television signal by analyzing the television signal at predefined analyzing frequencies, wherein a demodulator output signal is obtained that contains broadband noise when the analyzing frequency does not correspond to a sound carrier frequency;
a filter unit configured to filter the demodulator output signal and having a passband outside the bandwidth of the sound signal, wherein a filtered signal is generated; and
a detector unit configured to generate a detector signal indicating that a signal level in the filtered signal falls below a predetermined threshold.

10. The television receiver of claim 9, further comprising
a signal processing unit configured to shift the television signal by the analyzing frequencies for obtaining a modulated information signal, and
a pre-filter unit configured to generate the digital signal by attenuating, in the modulated information signal, out-of-band components of the sound signal.

11. The television receiver of claim 10, further comprising
a first control unit configured to control the signal processing unit to continuously change or not change the analyzing frequency in response to the detector signal .

12. The television receiver of claim 10 or 11, further comprising
a second control unit configured to control output sound signals of the signal processing unit in response to the detector signal .

13. The television receiver of any of claims 10 to 12, further comprising
a receiver unit configured to tune in to a television broadcast carrier frequency; and
a third control unit configured to control the receiver unit to perform a channel scan and to control the signal processing unit to scan for sound signal carriers each time the receiver unit has tuned in to a television broadcast carrier frequency.

14. The television receiver of any of claims 10 to 13, further comprising
a fourth control unit configured to control the signal processing unit to scan for a sub sound signal carrier each time after a main sound carrier has been detected and up to a sub sound signal carrier has been detected.

15. A method for processing a received analogue broadcast television signal in a television signal receiver apparatus, the method comprising
scanning for sound signal carriers by analyzing a digital signal derived from the television signal at predefined analyzing frequencies, wherein a demodulator output signal is obtained that contains broadband noise when the analyzing frequency does not correspond to a sound carrier frequency in the television signal;
filtering the demodulator output signal using a filter unit having a passband outside the bandwidth of the sound signal to generate a filtered signal; and
obtaining sound signal carrier information based on a detector signal indicating when a signal level in the filtered signal falls below a predetermined threshold.
